# EUROPEAN PATENT APPLICATION

(11) **EP 4 712 542 A1**
(43) Date of publication of application: **18.03.2026**
(21) Application number: 23936040.7
(22) Date of filing: 09.05.2023
(51) Int. Cl.: H04W 24/10

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); YOU, Xin, Dongguan, Guangdong 523860 (CN)
(74) Representative: Mewburn Ellis LLP
(86) International application number: PCT/CN2023/093094
(87) International publication number: WO 2024/229713

(57) **Abstract**

The disclosure relates to a communication method and a device. The method includes the following. A first device sends first information, where the first information includes a first model identity (ID), and the first model ID includes a first information field and/or a second information field. In embodiments of the disclosure, with the first information field and/or the second information field, a model ID can be used more flexibly.

## Description

### TECHNICAL FIELD

The disclosure relates to the field of communication, and more particularly, to a communication method and a device.

### BACKGROUND

With continuous development of artificial intelligence (AI) and machine learning (ML) technology, integration of communication technology and AI/ML technology is one of the trends of future communication. Due to complexity and diversity of communication system scenarios, a large number of AI/ML models may be introduced in a communication system, and how to manage these models needs to be considered.

### SUMMARY

Embodiments of the disclosure provide a communication method and a device, which can use a model identity (ID) more flexibly.

Embodiments of the disclosure provide a communication method. The method includes the following. A first device sends first information, where the first information includes a first model ID, and the first model ID includes a first information field and/or a second information field.

Embodiments of the disclosure provide a communication method. The method includes the following. A second device receives first information, where the first information includes a first model ID, and the first model ID includes a first information field and/or a second information field.

Embodiments of the disclosure provide a first device. The first device includes a first sending unit. The first sending unit is configured to send first information, where the first information includes a first model ID, and the first model ID includes a first information field and/or a second information field.

Embodiments of the disclosure provide a second device. The second device includes a first receiving unit. The first receiving unit is configured to receive first information, where the first information includes a first model ID, and the first model ID includes a first information field and/or a second information field.

Embodiments of the disclosure provide a communication device. The communication device includes a processor and a memory. The memory is configured to store computer programs. The processor is configured to invoke and execute the computer programs stored in the memory, to cause the communication device to perform the communication method described above.

Embodiments of the disclosure provide a chip. The chip is configured to implement the above communication method. Specifically, the chip includes a processor. The processor is configured to invoke and execute computer programs from a memory, to cause a device equipped with the chip to perform the communication method described above.

Embodiments of the disclosure provide a computer-readable storage medium. The computer-readable storage medium is configured to store computer programs which, when executed by a device, are operable with the device to perform the communication method described above.

Embodiments of the disclosure provide a computer program product. The computer program product includes computer program instructions which are operable with a computer to perform the communication method described above.

Embodiments of the disclosure provide a computer program. The computer program, when executed by a computer, is operable with the computer to perform the communication method described above.

According to embodiments of the disclosure, with the first information field and/or the second information field, a model ID can be used more flexibly.

### BRIEF DESCRIPTION OF THE DRAWINGS

FIG. 1 is a schematic diagram illustrating an application scenario according to embodiments of the disclosure.
FIG. 2 is a schematic flowchart of a communication method according to an embodiment of the disclosure.
FIG. 3 is a schematic flowchart of a communication method according to another embodiment of the disclosure.
FIG. 4 is a schematic flowchart of a communication method according to another embodiment of the disclosure.
FIG. 5 is a schematic flowchart of a communication method according to another embodiment of the disclosure.
FIG. 6 is a schematic flowchart of a communication method according to an embodiment of the disclosure.
FIG. 7 is a schematic flowchart of a communication method according to another embodiment of the disclosure.
FIG. 8 is a schematic flowchart of a communication method according to another embodiment of the disclosure.
FIG. 9 is a schematic flowchart of a communication method according to another embodiment of the disclosure.
FIG. 10 is a schematic block diagram of a first device according to an embodiment of the disclosure.
FIG. 11 is a schematic block diagram of a first device according to another embodiment of the disclosure.
FIG. 12 is a schematic block diagram of a second device according to an embodiment of the disclosure.
FIG. 13 is a schematic block diagram of a second device according to another embodiment of the disclosure.
FIG. 14 is a schematic block diagram of a communication device according to embodiments of the disclosure.
FIG. 15 is a schematic block diagram of a chip according to embodiments of the disclosure.
FIG. 16 is a schematic block diagram of a communication system according to embodiments of the disclosure.

### DETAILED DESCRIPTION

The following will describe technical solutions of embodiments of the disclosure with reference to the accompanying drawings in embodiments of the disclosure.

The technical solutions of embodiments of the disclosure are applicable to various communication systems, for example, a Global System of Mobile communication (GSM) system, a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5^{th}-generation (5G) communication system, or other communication systems, etc.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

In an implementation, the communication system in embodiments of the disclosure can be applied to a carrier aggregation (CA) scenario, or can be applied to a dual connectivity (DC) scenario, or can be applied to a standalone (SA) network deployment scenario.

In an implementation, the communication system in embodiments of the disclosure is applicable to an unlicensed spectrum, and an unlicensed spectrum can be regarded as a shared spectrum. Alternatively, the communication system in embodiments of the disclosure is applicable to a licensed spectrum, and a licensed spectrum can be regarded as a non-shared spectrum.

Various embodiments of the disclosure are described in connection with a network device and a terminal device. The terminal device can also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device can be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the disclosure, the terminal device can be deployed on land, which includes indoor or outdoor, handheld, wearable, or in-vehicle. The terminal device can also be deployed on water (such as ships, etc.). The terminal device can also be deployed in the air (such as airplanes, balloons, satellites, etc.).

In embodiments of the disclosure, the terminal device can be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device can also be a wearable device. The wearable device can also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device can be a device configured to communicate with a mobile device, and the network device can be an access point (AP) in a WLAN, a base transceiver station (BTS) in GSM or CDMA, a Node B (NB) in WCDMA, or can be an evolutional Node B (eNB or eNodeB) in LTE, or a relay station or AP, or an in-vehicle device, a wearable device, a network device (next-generation Node B (gNB)) in an NR network, a network device in a future evolved PLMN, or a network device in an NTN, etc.

By way of explanation rather than limitation, in embodiments of the disclosure, the network device can be mobile. For example, the network device can be a mobile device. Optionally, the network device can be a satellite or a balloon base station. For example, the satellite can be a low earth orbit (LEO) satellite, a medium earth orbit (MEO) satellite, a geostationary earth orbit (GEO) satellite, a high elliptical orbit (HEO) satellite, etc. Optionally, the network device can also be a base station deployed on land or water.

In embodiments of the disclosure, the network device serves a cell, and the terminal device communicates with the network device on a transmission resource (for example, a frequency-domain resource or a spectrum resource) for the cell. The cell can be a cell corresponding to the network device (for example, a base station). The cell can belong to a macro base station, or can belong to a base station corresponding to a small cell. The small cell can include: a metro cell, a micro cell, a pico cell, a femto cell, and the like. These small cells are characterized by small coverage and low transmission power and are adapted to provide data transmission service with high-rate.

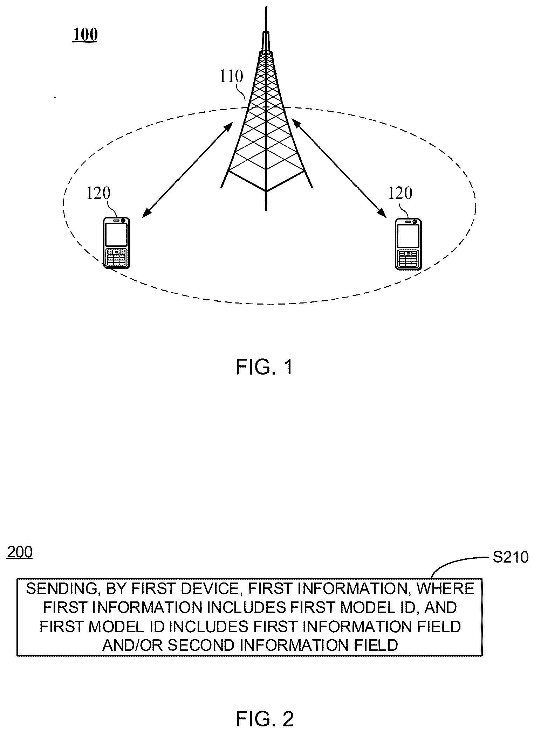

FIG. 1 exemplarily illustrates a communication system 100. The communication system 100 includes one network device 110 and two terminal devices 120. In an implementation, the communication system 100 can include multiple network devices 110, and there can be other quantities of terminal devices 120 in a coverage area of each of the network devices 110. Embodiments of the disclosure are not limited in this regard.

In an implementation, the communication system 100 can further include a mobility management entity (MME), an access and mobility management function (AMF), and other network entities, which is not limited in embodiments of the disclosure.

The network device can further include an access-network device and a core-network device, that is, the wireless communication system further includes multiple core networks for communicating with the access-network device. The access-network device can be an eNB, a macro base station, a micro base station (also referred to as a "small base station"), a pico base station, an AP, a transmission point (TP), or a gNB in an LTE system, an NR system, or a licensed assisted access LTE (LAA-LTE) system.

It should be understood that, in embodiments of the disclosure, a device with communication functions in a network/system can be referred to as a "communication device". Taking the communication system illustrated in FIG. 1 as an example, the communication device may include the network device and the terminal device(s) that have communication functions. The network device and the terminal device(s) can be the devices in embodiments of the disclosure and will not be elaborated again herein. The communication device may further include other devices such as a network controller, aN MME, or other network entities in the communication system, and embodiments of the disclosure are not limited in this regard.

It should be understood that, the terms "system" and "network" herein are usually used interchangeably throughout this disclosure. The term "and/or" herein only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It should be understood that, "indication" referred to in embodiments of the disclosure can be a direct indication, can be an indirect indication, or can mean that there is an association relationship. For example, *A* indicates *B* can mean that *A* directly indicates *B*, for instance, *B* can be obtained according to *A*; can mean that *A* indirectly indicates *B*, for instance, *A* indicates *C*, and *B* can be obtained according to *C*; or can mean that that there is an association relationship between *A* and *B*.

In the elaboration of embodiments of the disclosure, the term "correspondence" can mean that there is a direct or indirect correspondence between the two, can mean that there is an association between the two, or can mean a relationship of indicating and indicated or configuring and configured, etc.

In order to facilitate understanding of technical solutions of embodiments of the disclosure, the following will describe the related art of embodiments of the disclosure. The following related art as an optional solution can be arbitrarily combined with the technical solutions of embodiments of the disclosure, which shall all belong to the protection scope of embodiments of the disclosure.

In order to facilitate management and control of cell-related operations, a cell identity (ID) is introduced in a communication system, and in addition, the definition of the cell ID differs for different application scenarios, which is specifically as follows.

A physical cell identity (PCI) is introduced for a physical cell, and a complete PCI can be obtained by combining a frequency ID associated with the cell. The PCI can only uniquely identify one cell in a local area, but can be reused in different geographic areas. The PCI can be used in scenarios such as measurement reporting and measurement configuration.

A cell global identity (CGI) is introduced for a logical cell, where the CGI ID consists of a PLMN ID and a cell ID. The CGI is a global unique ID, and the CGI can be used in scenarios such as measurement reporting.

A secondary cell (SCell) index is introduced for the case where a serving cell is an SCell, so that a terminal device can manage one or more cells configured by a network device, for example, SCell activation and deactivation.

In order to facilitate management of a large number of artificial intelligence / machine learning (AI/ML) models introduced, IDs can be introduced for the AI/ML models in a communication system. In embodiments of the disclosure, an AI/ML model ID can be defined, and further, AI operations can be performed by using the AI/ML model ID.

FIG. 2 is a schematic flowchart of a communication method according to an embodiment of the disclosure. The method 200 can optionally be applied to the system illustrated in FIG. 1, but is not limited thereto. The method includes at least some of the following.

S210, a first device sends first information, where the first information includes a first model ID, and the first model ID includes a first information field and/or a second information field.

In embodiments of the disclosure, the first device can store model-related information, where the model-related information includes one or more of: a model ID, model algorithm data, or model description information. It is necessary to synchronize some information with a second device so as to facilitate subsequent model management. For example, the first device can send the first information to the second device. The model can be an AI model and/or an ML model. The first model ID can include an ID of an AI model and/or an ID of an ML model.

In embodiments of the disclosure, the first information can include only the first information field, or can include only the second information field, or can include the first information field and the second information field. For example, the first information field and the second information field are combined to obtain the first model ID, where the first information field represents a fixed part in a model ID, and the second information field represents an unfixed part in the model ID. With the first information field and/or the second information field, the model ID can be used more flexibly, which facilitates performing model control more flexibly based on the model ID subsequently. For example, model control is performed by using a fixed model ID only, or by using an unfixed model ID only, or by using a model ID obtained through combination of the fixed model ID and the unfixed model ID.

In some scenarios, the first device can be a terminal device, and the second device can be a network device.

In some scenarios, the first device can be a network device, and the second device can be a terminal device.

In some scenarios, the first device can be a first terminal device, and the second device can be a second terminal device.

In some scenarios, the first device can be a first network device, and the second device can be a second network device.

In embodiments of the disclosure, the network device can be an access-network device, a core-network device, an AI/ML model-related information management device, or an operation administration and maintenance (OAM) device.

Exemplarily, the access-network device can be any one of: a gNB, a centralized unit (CU), a distributed unit (DU), a CU-control plane (CU-CP), or a CU-user plane (CU-UP).

Exemplarily, the core-network device can be any one of: a location management function (LMF) network element, a network slice selection function (NSSF), an authentication server function (AUSF), a unified data management (UDM), an access and mobility management function (AMF), a session management function (SMF), a policy control function (PCF), a user plane function (UPF), a sensing function (SF), or a network data analytics function (NWDAF) network element.

In an implementation, the first information field includes at least one of: a semantic-invariant model ID, a universal model ID, or a global unique model ID. The first information field of the first model ID can be known or predefined in a protocol. For example, the value and the meaning of the first information field are predefined in the protocol. In any functional system that applies the protocol, the meaning corresponding to the value of the first information field can be fixed, predetermined, known, or globally universal. For example, one or more information such as a model type, a model function, and a model name can be determined based on the value of the first information field predefined in the protocol.

In an implementation, the second information field includes a semantic-variable model ID and/or a custom model ID. The meaning corresponding to the value of the second information field of the first model ID can be unfixed, the meaning of the same value can be the same or can be different in different devices or different systems, and the specific meaning corresponding to the value of each second information field can be determined or defined by an information provider.

In embodiments of the disclosure, each model can correspond to a fixed first information field and/or an unfixed second information field. For example, model ID ID1 predefined in a protocol represents a model used for channel state information (CSI) compression and feedback, model ID ID2 represents a model used for beam management, and model ID ID3 represents a model used for positioning. If the first information field of the first model ID includes model ID ID1, a receiver, sender, storage provider, or generator of the first model ID can determine that a model corresponding to model ID ID1 is used for a CSI compression and feedback function.

In an implementation, the first information field and/or the second information field has model description information associated therewith.

In an implementation, the model description information includes one or more of: a model-associated functional characteristic, model-associated input-parameter type information, model-associated input-parameter format requirement information, a model-associated input-parameter pre-processing rule, model-associated output-parameter type information, model-associated output-parameter format requirement information, a model-associated output-parameter pre-processing rule, model-associated application scenario information, model-associated deployment location information, capability requirement information for model usage, model-associated performance monitoring index information, model-associated home location information, model-associated valid use range information, model generalization characteristic information, model version information, model accuracy level information, model-data compilation format information, model data storage format information, model computation complexity information, model complexity information, or model size information.

### Information 1: model-associated functional characteristic

The model-associated functional characteristic indicates a function associated with a corresponding model. For example, model 1 is used for a CSI compression and feedback function, model 2 is used for a mobility enhancement function, model 3 is used for a beam prediction function, model 4 is used for a positioning function, etc.

### Information 2: model-associated input-parameter type information

The model-associated input-parameter type information indicates an input-parameter type required for a corresponding model. For example, model 3 is used for a beam prediction function, and the input-parameter type required for model 3 includes index information of a beam actually measured, signal measurement result information of each beam obtained through actual measurement, etc.

### Information 3: model-associated input-parameter format requirement information

The model-associated input-parameter format requirement information indicates an input-parameter format required for a corresponding model. For example, model 3 is used for a beam prediction function. It is assumed that the network device can schedule resources in eight beam directions, but has sent measurement reference signals in four beam directions only. In this case, the terminal device can only obtain measurement results of four beams in each measurement. Scenario 1: a beam prediction model is only used for predicting signal measurement results of other beams which have not been measured at the current time. If the beam prediction model used in scenario 1 only needs input of measurement results of four beams, then the measurement results of four beams obtained by the terminal device in each measurement can be exactly used as inputs of the beam prediction model for scenario 1 (the output can be measurement results of eight beams associated with the current measurement, i. e. four true values and four prediction values, or the output can be predicted measurement results of four beams). Scenario 2: a beam prediction model is used for predicting measurement results of eight beams in a future time period. In this scenario, the input of the beam prediction model may be a set of measurement results of four beams obtained in previous *N* measurements, and the output of the beam prediction model is a set of measurement results of eight beams in a future time period. For example, the input of the beam prediction model is a set of three groups of measurement results of four beams obtained at time *T*-3, time *T*-2, and time *T*-1, and the output of the beam prediction model is a set of two groups of measurement results of eight beams at time *T* and time *T*+1.

As can be seen, although for different application scenarios, measurement results of four beams measured are used to perform beam prediction (the input-parameter type of the model is the same), input-data formats required in different application scenarios are different. Therefore, AI/ML model-associated input-parameter format requirement information is also one of key information for describing a model.

### Information 4: model-associated input-parameter pre-processing rule

The model-associated input-parameter pre-processing rule indicates how to re-process an input-data set of a corresponding model, and an operation involved in reprocessing may include at least one of: data dimensionality reduction, data dimensionality increase, redundancy elimination, or redistribution.

Data dimensionality reduction: if the dimensionality of data is higher than a dimensionality required for model input, dimensionality reduction needs to be performed on the data based on a pre-processing rule before the data is input into the model.

Data dimensionality increase: if the dimensionality of data is lower than a dimensionality required for model input, dimensionality increase needs to be performed on the data based on a pre-processing rule before the data is input into the model.

Redundancy elimination: if multiple groups of data are almost the same in terms of distribution or information amount, then redundancy elimination needs to be performed on the data based on a pre-processing rule before the data is input into a model. This is because redundant data usually cannot bring further improvement in performance, but on the contrary, will increase invalid operations.

Redistribution: sometimes, if data with slight difference in feature information is put together for model training, a model thus obtained is difficult to have good model generalization. Through redistribution of data with different feature information, it is beneficial to obtaining a model with good generalization.

For example, for scenario 1 in information 3, the terminal device can measure four of eight beams in cell *A*, five of eight beams in cell *B*, and three of eight beams in cell *C*. If it is desired to use the same beam prediction model (only measurement results of four beams are required for input) for beam prediction in cell *A*, cell *B*, and cell *C*, measurement results from cell *A* can be used directly; while dimensionality reduction needs to be performed on measurement results obtained from cell *B*, that is, four measurement results are selected from measurement results of the five available beams and used as input parameters required for the model; and dimensionality increase needs to be performed on measurement results obtained from cell *C*, that is, measurement results of the three available beams are transformed into four to obtain input parameters required for the model.

In another implementation, at least two of information 2, information 3, or information 4 can be defined in combination, which is not limited in the disclosure.

### Information 5: model-associated output-parameter type information

The model-associated output-parameter type information indicates an output-parameter type required for a corresponding model. For example, model 3 is used for a beam prediction function, and a corresponding output-parameter type includes index information of beams not actually measured and predicted signal measurement result information of the beams not actually measured, etc.

### Information 6: model-associated output-parameter format requirement information

The model-associated output-parameter format requirement information indicates an output-parameter format required for a corresponding model. For example, model 3 is used for a beam prediction function, and an output parameter can be a beam prediction result at one future time or can be a beam prediction result set at multiple future times. For instance, the model input is a set of three groups of measurement results of four beams obtained at time *T*-3, time *T*-2, and time *T*-1, and the model output can be measurement results of eight beams at time *T* or a set of two groups of measurement results of eight beams at time *T* and time *T*+1.

As can be seen, for different application scenarios, in terms of predicting a future beam measurement result (the output-data type of the model is the same), output-data formats required for model 3 in different application scenarios are different. Therefore, the model-associated output-parameter format requirement information is also one of key information for describing a model.

### Information 7: model-associated output-parameter pre-processing rule

The model-associated output-parameter pre-processing rule indicates how to re-process an output data set of a corresponding model, and an operation involved in reprocessing may include at least one of: dimensionality reduction, dimensionality increase, redundancy elimination, or redistribution. For the specific processing method, reference can be made to related elaborations of information 4.

In another implementation, at least two of information 5, information 6, or information 7 can be defined, which is not limited in the disclosure.

### Information 8: model-associated application scenario information

The model-associated application scenario information refers to different application scenarios under the same functional characteristic. For example, for a model used for positioning, the application scenario can be further classified into a line of sight (LoS) scenario, a non-line of sight (NLoS) scenario, or a hybrid scenario (including both LoS and NLoS). For another example, for a model used for mobility control, the application scenario can be further classified into a terrestrial communication scenario and a non-terrestrial communication scenario (including sub-scenarios such as satellite communication, unmanned aerial vehicle communication, and thermal balloon communication). Each scenario can be further classified into sub-scenarios such as a high-speed movement scenario, a medium-speed movement scenario, and a low-speed movement scenario, or can be classified into sub-scenarios such as a high-frequency mobility scenario and a low-frequency mobility scenario. Any two scenarios can also combined, such as a terrestrial-communication high-frequency mobility scenario.

Optionally, information 8 can also have a value, and the meaning of the value indicates whether an application scenario for the model is a full scenario (i. e. the model is applicable to any scenario corresponding to a functional characteristic associated with the model). For example, for a model used for positioning, assuming that information 8 has two bits, then value "00" represents a full scenario, "01" represents an LoS scenario, "10" represents an NLoS scenario, and "11" represents a hybrid scenario.

### Information 9: model-associated deployment location information

The model-associated deployment location information includes any one of the following meanings: deployed at a core-network device, deployed at an application server, deployed at an OAM, deployed at an access-network device, deployed at a terminal device, or no restriction on deployment location.

### Information 10: capability requirement information for model usage

The capability requirement information for model usage indicates several capability requirements for using a model. For example, the capability requirement information for model usage includes one or more of: the minimum requirement on floating-point arithmetic capability required for model usage, the minimum requirement on running memory required for model usage, a level of memory size occupied by model algorithm data before compilation, a level of memory size occupied by model algorithm data after compilation, the minimum rate (or bit rate) of input data required for model usage, the maximum rate (or bit rate) of input data required for model usage, the minimum rate (or bit rate) of output data required for model usage, or the maximum rate (or bit rate) of output data required for model usage.

### Information 11: model-associated performance monitoring index information

The model-associated performance monitoring index information indicates several indexes for monitoring a model. For example, the model-associated performance monitoring index information includes one or more of: average power consumption of a single inference operation, an average floating-point calculation amount of a single inference operation, an average delay of a single inference operation, a system throughput, a system bit-error rate, or an average transmission delay of a data packet.

### Information 12: model-associated home location information

The model-associated home location information indicates provider-related information of model data, and specifically includes information of a country region that the model data belongs to and/or information of a service provider that the model data belongs to.

The service provider can be any one of: over the top (OTT) vendor information, network operator information (for example, represented by a PLMN ID), or public website information.

### Information 13: model-associated valid use range information (for example, applicable scenario, configuration, site information, etc.)

The model-associated valid use range information indicates a condition for valid use of a model. For example, the model-associated valid use range information includes one or more of: geographic region information allowed for valid use, country information allowed for valid use, PLMN information allowed for valid use, tracking area code (TAC) information allowed for valid use, radio access network area code (RANAC) information allowed for valid use, cell information allowed for valid use, or configuration information allowed for valid use.

### Information 14: model generalization characteristic information

The generalization characteristic reflects the breadth of an applicable scenario(s) for a model. Generally, higher generalization characteristic of the model leads to more application scenarios that the model is applicable to. The model generalization characteristic information can include information of at least one application scenario associated with a model (as defined in information 8), which indicates that the associated model can be applied in the foregoing application scenario(s).

### Information 15: model version information

As different parameters in the same application scenario change over time, algorithm data of a model of a corresponding function may need to be refined or updated. The model updated and the model before update are the same in terms of application scenario(s) associated therewith and also have the same functions, but differ slightly only in details of model algorithm data, which therefore can be differentiated by using model algorithm version numbers, thereby facilitating control and management of the same type of model algorithm.

### Information 16: model accuracy level information

Even for models of the same function and the same application scenario, different complexity of model algorithm design will lead to different model inference accuracy. In order to distinguish difference between the same type of models in terms of inference accuracy, the model algorithm accuracy level information can be used to describe inference accuracy of a corresponding model.

### Information 17: model-data compilation format information

A model algorithm is essentially a program written in computer language, and program files written by different language platforms are different in type. Some languages can be compatible with each other, while some other languages cannot be compatible with each other. Therefore, model-algorithm-data compilation format information is also key information for describing a model. According to such information, a model user can know a compilation environment required for using the model. Otherwise, use of an incompatible language compilation environment will result in inability to use the corresponding model algorithm.

### Information 18: model data storage format information

This information indicates the format in which model data is stored, e. g., a zip compression format, etc.

### Information 19: model computation complexity information

This information indicates a basic computational capability required for using a model, e. g., the number of floating points required to be calculated per second.

### Information 20: model complexity information

The information indicates the complexity of a model, for example, how many layers of neurons the model consists of.

### Information 21: model size information

The information indicates the size of memory occupied by model data before or after compilation.

In embodiments of the disclosure, the first information field and the second information field can include the same type of model description information. Specific values of the same type of model description information in the first information field and the second information field can be the same or different. For example, the accuracy of a positioning model associated with the first information field is less than 10 meters, while the accuracy of a positioning model associated with the second information field is less than 5 meters. In an implementation, association information between the first information field and model description information associated with the first information field is predefined. In a protocol, an association between the first information field and the corresponding model description information can be predefined. Optionally, by means of predefinition, the model description information associated with the first information field includes one or more of information 1 ~ information 21, the value of each information is in a form of fixed value, or fixed configuration, or value range, or configuration range, and the values of different information can have the same form or different forms.

For example, a function of a model corresponding to model ID ID2 in the first information field is beam spatial-domain prediction, and values of various information in model description information associated with ID2 are as follows. A functional characteristic associated with ID2 is beam spatial-domain prediction. An input-parameter type associated with ID2 is four beam IDs and a reference-signal measurement result corresponding to each beam ID. An input-parameter format requirement associated with ID2 is the most-recently obtained result of single beam-measurement. An input-parameter pre-processing rule associated with ID2 is: if the number of beams actually measured is greater than four, four beams with the highest beam measurement results are selected as model inputs (and/or if the number of beams actually measured is less than four, a regression algorithm is adopted to supplement them into four beams as model inputs). An output-parameter type associated with ID2 is eight beam IDs obtained through inference and a reference-signal inference result corresponding to each beam ID. The model-associated output-parameter format requirement is a result of single beam-inference inferred based on the most-recently obtained result of single beam-measurement. An output-parameter pre-processing rule associated with ID2 is to select *K* (*K* is a positive integer and *K* ≥ 1) beam IDs from multiple beam measurement results obtained through actual measurement and inference and a reference-signal measurement/inference result corresponding to each selected beam ID to report to the second device. An application scenario associated with ID2 is a wide-beam scenario, or a narrow-beam scenario, or a scenario in which both a wide beam and a narrow beam are applicable. A deployment location associated with ID2 is a terminal-device side or a network-device side. A capability for using a model corresponding to ID2 includes: a computational capability for running a beam prediction model is not lower than a first threshold, a usable memory is not lower than a second threshold, and a capability of model training-data collection is supported. A performance monitoring index associated with ID2 is the accuracy of the first *M* (*M* is a positive integer and *M* ≥ 1) predicted beam measurement results. A home location associated with ID2 is a terminal device. Valid use range information associated with ID2 includes a first configuration, or a first geographic location area, or a first cell list. A generalization characteristic associated with ID2 is that expected inference accuracy can be achieved in a cell deployed at any frequency in Band A and Band B. A model accuracy level associated with ID2 is 2 (values of an accuracy range corresponding to each accuracy level are also predefined in a protocol). A model-data compilation format associated with ID2 is ONNEX. A model computation complexity associated with ID2 is *N* (*N* is a positive number and *N* ≥ 1) floating points per second. A model complexity associated with ID2 is: L1 ~ L2 neurons per layer, and/or the model does not exceed L3 layers of neurons (*L*1, *L*2, and *L*3 each are a positive integer greater than or equal to 1). A model size associated with ID2 does not exceed *W*1 megabytes (MB) or belongs to *W*2 MB to *W*3 gigabytes (GB).

As can be seen from the foregoing example, some information in the model description information associated with the first information field is predefined in the form of fixed value or fixed configuration value, while some other information in the model description information associated with the first information field is predefined by using a value range or a configuration range, that is, all the information in the model description information associated with the first information field is predefined.

In an implementation, association information between the second information field and model description information associated with the second information field is obtained through model detection or testing. The second information field can include an actual value(s) of model description information obtained by detecting or testing an actual model. Each information in the model description information associated with the second information field can be an example of each information requirement in the model description information associated with the first information field. For example, it is obtained through query according to the first information field (e. g., ID2) that a model size requirement for model *A* is 100MB ~ 500MB (a predefined standard value interval), and the size of model *A* obtained through actual training is 300 MB, then model *A* obtained through actual training satisfies a requirement in the model description information associated with the first information field; otherwise, if the size of model *A* obtained through training is 600 MB, the standard value of the first information field cannot be used (in this example, ID2 cannot be used) even though the model is also used for the corresponding function. The value of each information in model description information associated with a model obtained through actual training must satisfy a predefined value requirement of each information in the model description information associated with the first information field. The reason for which the second information field needs to be additionally defined is to maintain flexibility of model implementation when the model requirement is predefined.

In an implementation, the first information further includes model description information associated with the second information field. The model description information associated with the second information field includes one or more information in the foregoing information 1 ~ information 21. For example, the first model ID in the first information includes the first information field, and further includes the model description information associated with the second information field. For another example, the first model ID in the first information includes the first information field and the second information field, and further includes the model description information associated with the second information field.

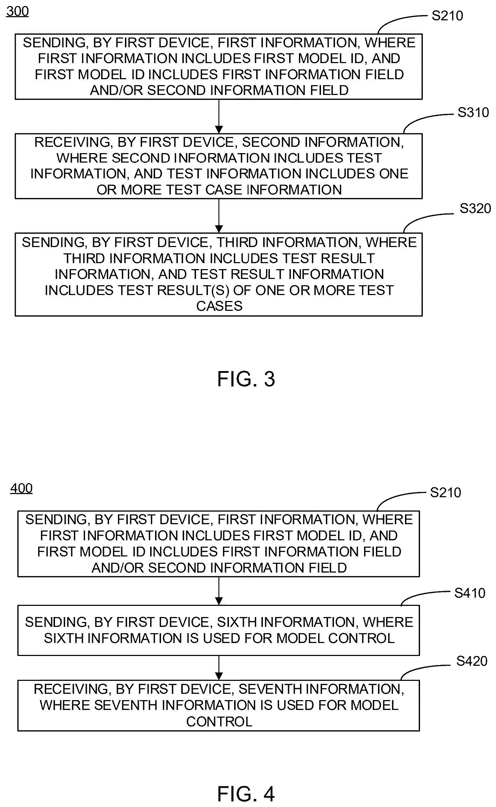

FIG. 3 is a schematic flowchart of a communication method according to another embodiment of the disclosure. The method 300 can include at least one feature of the method embodiment implemented by the first device described above. The method 300 further includes the following.

S310, the first device receives second information, where the second information includes test information, and the test information includes one or more test case information.

In embodiments of the disclosure, after the first information is received from the first device, the second device can generate one or more corresponding test case information based on the first model ID in the first information, and then send the one or more corresponding test case information to the first device via the second information. For example, if the value of the first model ID indicates a CSI model and requirements associated with the CSI model, the second device can generate test case information satisfying requirements associated with the CSI model. After the test case information is received, the first device can perform model testing based on the test case information. For example, after the test case information satisfying the requirements associated with the CSI model is received, the first device uses the test case information to test the CSI model, so as to obtain a test result. Exemplarily, each test case information can include value information of one group of model input-parameter examples.

In an implementation, as illustrated in FIG. 3, the method further includes the following.

S320, the first device sends third information, where the third information includes test result information, and the test result information includes a test result(s) of one or more test cases.

In embodiments of the disclosure, the test result can include one or more of: model output-parameter value information, model testing success indication information, model testing failure indication information, or model testing failure reason indication information. The first device can send the test result to the second device via the the third information.

In an implementation, the method further includes the following. The first device receives fourth information, where the fourth information includes rejection information, and the rejection information is used for rejecting a request made in the first information.

In some examples, the first information is used to request the second device to use the first information field and/or the second information field in the first model ID to perform model control. After the first information is received, if the second device rejects to use the information field in the first model ID, the second device can send to the first device the fourth information including the rejection information.

In some examples, after the third information is received, the second device knows that model testing fails or finds that the model test result does not satisfy a requirement in corresponding model description information (for example, the model accuracy is lower than the requirement in the model description information), and then can send to the first device the fourth information including the rejection information. In addition, even though the second device knows that model testing is successful or finds that the model test result satisfies the requirement in the corresponding model description information based on the third information, the second device may also send to the first device the fourth information including the rejection information.

After the rejection information is received from the second device, the first device can terminate the current information exchange procedure.

In an implementation, the fourth information further includes rejection reason information. For example, the rejection reason can include: the model test result does not satisfy requirements, the second device does not support deployment of the model, the second device does not support management of the model, model testing fails, the first model ID is not accepted, etc. The rejection reason information in the fourth information can be a value corresponding to the rejection reason. For example, "the model test result does not satisfy requirements" corresponds to 00, "model testing fails" corresponds to 01, "the first model ID is not accepted" corresponds to 10, which can also be other values.

In an implementation, the method further includes the following. The first device receives fifth information, where the fifth information includes request acceptance information and/or a third information field. After the first information or the third information is received, if the second device determines to use the information field in the first model ID, the second device can send the fifth information to the first device. If the fifth information includes the request acceptance information, the first device can perform a subsequent operation such as model control based on the request acceptance information. If the fifth information includes the third information field, the first device can update the model ID based on the third information field.

In an implementation, the method further includes the following. The first device generates a second model ID based on the third information field. In embodiments of the disclosure, the meaning corresponding to the value of the third information field can be the same as or different from the meaning corresponding to the value of the second information field. Before the third information field is received, the first device may have stored the second information field, or may have not generated or stored the second information field. Based on whether the first device has stored the second information field before the third information field is received and whether the meaning corresponding to the value of the third information field is the same as the meaning corresponding to the value of the second information field, the second model ID can be generated accordingly.

In an implementation, the second model ID can be generated in at least one of the following manners. The second model ID is obtained by combining the first information field and all or some information subfields of the third information field. Alternatively, the second model ID is obtained by combining the first information field, the second information field, and all or some information subfields of the third information field.

In some examples, when the meaning of the third information field is the same as the meaning of the second information field, if the first device has stored the second information field before the third information field is received, the first device can replace the previously stored second information field by the received third information field, and obtain the second model ID by combining the first information field and the third information field; if the first device has not generated or stored the second information field before the third information field is received, the first device can store the received third information field, and then obtain the second model ID by combining the first information field and the third information field.

In some examples, when the meaning of the third information field is different from the meaning of the second information field, the second model ID is generated in at least one of the following manners.

Manner 1: If the first device has stored the second information field before the third information field is received, the previously stored second information field can be replaced by all or some information subfields of the received third information field, and the second model ID is obtained by combining the first information field and all or some information subfields of the third information field.

Manner 2: If the first device has stored the second information field before the third information field is received, all or some information subfields of the received third information field can be used as a supplementary part of the first model ID. For example, the second model ID is obtained by combining the first information field, the second information field, and all or some information subfields of the third information field.

Manner 3: If the first device has not generated or stored the second information field before the third information field is received, the first device can store the received third information field, and all or some information subfields of the third information field are used as a supplementary part of the first model ID. For example, the second model ID is obtained by combining the first information field and all or some information subfields of the third information field.

Said some information subfields described above can include one or more information subfields of the third information field.

In an implementation, the second information field and/or the third information field includes one or more of the following information in an information subfield (hereinafter referred to as "information subfield information"): model-associated operator information, model-associated terminal-device vendor information, model-associated model provider or producer information, model-associated chip vendor information, model-associated network-device vendor information, model version number information, or model-associated temporary ID information.

In embodiments of the disclosure, the second information field can be a semantic-variable model ID and/or a custom model ID. For example, the semantic-variable model ID can include one or more of the foregoing information subfield information, or can include other information. The information subfield information in the second information field can be the same as, or partially the same as, or different from the information subfield information in the third information field. For example, the second information field includes the model-associated operator information and the model-associated terminal-device vendor information, and the third information field includes the model-associated terminal-device vendor information and the model-associated model provider or producer information.

FIG. 4 is a schematic flowchart of a communication method according to another embodiment of the disclosure. The method 400 can include at least one feature of the method embodiment implemented by the first device. The method 400 further includes the following.

S410, the first device sends sixth information, where the sixth information is used for model control, and the sixth information includes one or more of: the first model ID, the second information field, the second model ID, or one or more information subfields of the third information field.

In embodiments of the disclosure, the first device can send the sixth information to the second device, where the sixth information can be used for model control of the second device. For example, if the sixth information includes the first model ID, model control can be performed on a model corresponding to the first model ID. If the sixth information includes the second information field, model control can be performed on a model corresponding to the second information field. If the sixth information includes the second model ID, model control can be performed on a model corresponding to the second model ID. If the sixth information includes the information subfield of the third information field, model control can be performed on a model corresponding to the information subfield of the third information field.

In an implementation, as illustrated in FIG. 4, the method further includes the following.

S420, the first device receives seventh information, where the seventh information is used for model control, and the seventh information includes one or more of: the first model ID, the second information field, the second model ID, and one or more information subfields of the third information field. In embodiments of the disclosure, the first device can receive the seventh information from the second device, where the seventh information can be used for model control of the first device. For examples thereof, reference can be made to related elaborations of the sixth information.

In an implementation, model control includes one or more of: model selection, model activation, model deactivation, model switching, model deletion, model monitoring, model inference, model training, model update, model-associated capability exchange, model registration, model transmission, model training-data collection, model monitoring-data collection, model inference-data collection, model update-data collection, or model deployment.

In embodiments of the disclosure, the sixth information and/or the seventh information can include information fields indicating various model control procedures, or the sixth information and/or the seventh information itself can indicate a certain model control procedure. For example, if a certain control bit in the sixth information is 0, it indicates model activation; and if the bit is 1, it indicates model deactivation. For another example, if two control bits in the sixth information are 00, they indicate model selection; if the two bits are 01, they indicate model activation; if the two bits are 10, they indicate model deactivation; and if the two bits are 11, they indicate model switching. For another example, the function of the sixth information is model monitoring, and the function of the seventh information is model-associated capability exchange. The meanings corresponding to the above values and the functions corresponding to the information are intended only for illustration rather than limitation, and can be set flexibly according to actual requirements.

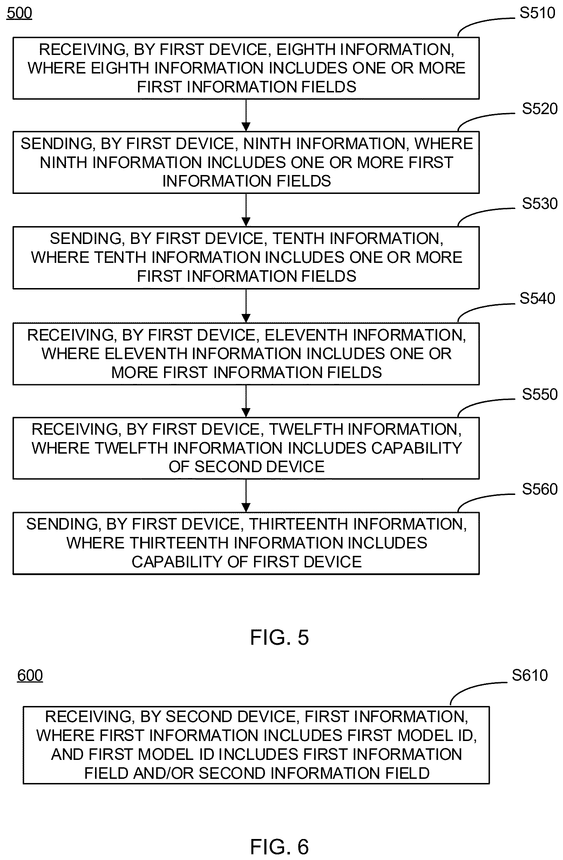

FIG. 5 is a schematic flowchart of a communication method according to another embodiment of the disclosure. The method 500 can include at least one feature of the method embodiment implemented by the first device. The method 500 further includes the following.

S510, the first device receives eighth information, where the eighth information includes one or more first information fields.

In embodiments of the disclosure, the second device can notify, via the eighth information, to the first device which models deployed by the first device need synchronization of model description information with the second device. For example, the first device has deployed model *M*1, model *M*2, model *M*3, and model *M*4. If the eighth information includes a first information field associated with model *M*1 and a first information field associated with model *M*2, then the first device needs to synchronize model description information associated with model *M*1 and model description information associated with model *M*2 with the second device.

In an implementation, the eighth information indicates to the first device to carry out information synchronization with the second device regarding model description information associated with a target model deployed by the first device.

In an implementation, as illustrated in FIG. 5, the method further includes the following.

S520, the first device sends ninth information, where the ninth information includes one or more first information fields.

In an implementation, the ninth information indicates to the second device that information synchronization of the model description information associated with the target model deployed by the first device can be carried out with the second device.

In embodiments of the disclosure, the first device can notify, via the ninth information, to the second device which models deployed by the first device can synchronize model description information with the second device. For example, the first device has deployed model *M*1, model *M*2, model *M*3, and model *M*4. If the ninth information includes a first information field associated with model *M*1, a first information field associated with model *M*2, a first information field associated with model *M*3, and a first information field associated with model *M*4, then the first device can synchronize model description information associated with model *M*1, model description information associated with model *M*2, model description information associated with model *M*3, and model description information associated with model *M*4 with the second device.

In embodiments of the disclosure, there is no limitation on the order of the eighth information and the ninth information. The first device can firstly receive the eighth information, or can firstly send the ninth information. For example, the first device can firstly send the ninth information to the second device, to notify to the second device a range of models for which synchronization is supported by the first device, and then receive the eighth information from the second device, to obtain a model which is actually required to be synchronized by the second device. For example, the first device can firstly send the ninth information including a first information field associated with model *M*1, a first information field associated with model *M*2, and a first information field associated with model *M*3 to the second device, and then receive the eighth information including the first information field associated with model *M*2 from the second device.

In embodiments of the disclosure, before or after the first information is received, by exchanging the eighth information and/or the ninth information with the second device, the first device can determine a range of model types for which information exchange is to be performed.

In an implementation, as illustrated in FIG. 5, the method further includes the following.

S530, the first device sends tenth information, where the tenth information includes one or more first information fields.

In an implementation, the tenth information indicates a first information field associated with a model which has been stored or deployed by the first device and/or a first information field associated with a model which has not been stored or deployed by the first device.

In embodiments of the disclosure, one or more models can be stored or deployed by the first device. For example, model *M*1, model *M*2, model *M*3, and model *M*4 are deployed by the first device, and the first device can report to the second device first information fields associated with model *M*1, model *M*2, model *M*3, and model *M*4 that are deployed by the first device. For another example, model *M*5, model *M*6, and model *M*7 are not stored by the first device, and the first device can report to the second device first information fields associated with model *M*5, model *M*6, and model *M*7 that are not stored by the first device.

In an implementation, as illustrated in FIG. 5, the method further includes the following.

S540, the first device receives eleventh information, where the eleventh information includes one or more first information fields.

In an implementation, the eleventh information is used for querying a model stored and/or deployed by the first device.

In embodiments of the disclosure, the model stored and/or deployed by the first device can be reported based on a query request from the second device. For example, the query request received from the second device by the first device is the eleventh information for querying the model stored and/or deployed by the first device. After the eleventh information is received, the first device can send the tenth information to the second device based on the eleventh information, so as to notify the second device.

In embodiments of the disclosure, any two or more of the eighth information, the ninth information, the tenth information, or eleventh information can be used in cooperation. For example, the first device firstly sends the tenth information to the second device, and then receives the ninth information and/or the eleventh information replied by the second device. For another example, the first device firstly receives the eleventh information sent by the second device, and then sends the eighth information and/or the tenth information to the second device. For another example, the first device firstly receives the eleventh information sent by the second device, then sends the tenth information to the second device, then sends the ninth information to the second device, and then receives the eighth information sent by the second device.

In embodiments of the disclosure, the first device can exchange one or more of the eighth information, the ninth information, the tenth information, or the eleventh information with the second device. The first device can also exchange one or more of the eighth information, the ninth information, the tenth information, or the eleventh information with other devices except the second device. For example, after the ninth information is received from a third device, the first device sends the first information to the second device.

In an implementation, as illustrated in FIG. 5, the method further includes the following.

S550, the first device receives twelfth information, where the twelfth information includes a capability of the second device. In embodiments of the disclosure, the first device can receive the twelfth information from the second device, so as to obtain the capability of the second device. The capability of the second device can be a model-associated capability.

In an implementation, the capability of the second device includes one or more of: whether model registration is supported, whether information synchronization of model description information is supported, whether model control is supported, or whether model information query is supported.

For example, if the capability of the second device in the twelfth information indicates that the second device supports model registration, the second device can subsequently be indicated, via other information such as the sixth information, to perform model registration. If the capability of the second device the twelfth information indicates that the second device does not support model registration, the second device does not perform model registration subsequently. Examples of other capabilities of the second device are similar, which are not illustrated herein for brevity.

In an implementation, as illustrated in FIG. 5, the method further includes the following.

S560, the first device sends thirteenth information, where the thirteenth information includes a capability of the first device. In embodiments of the disclosure, the first device can send the thirteenth information to the second device, so as to notify the capability of the first device to the second device. The capability of the first device can be a model-associated capability.

In an implementation, the capability of the first device includes one or more of: whether model registration is supported, whether information synchronization of model description information is supported, whether model control is supported, or whether model information query is supported.

For example, if the capability of the first device in the thirteenth information indicates that the first device supports model registration, the first device can subsequently be indicated, via other information such as the seventh information, to perform model registration. If the capability of the first device in the thirteenth information indicates that the first device does not support model registration, the first device does not perform model registration subsequently. Examples of other capabilities of the first device are similar, which are not illustrated herein for brevity.

In embodiments of the disclosure, the first device can exchange the twelfth information and/or the thirteenth information with the second device before or after the first information is sent, or can exchange the twelfth information and/or the thirteenth information with the second device after the first information is sent. In the disclosure, the order of sending the twelfth information and/or the thirteenth information and sending other information illustrated in FIG. 5 is also not limited, and FIG. 5 is only an example.

Any information involved in embodiments of the disclosure, such as any information from the first information to the thirteenth information, can be carried in any one of the following message types: a LTE positioning protocol (LPP) message, a non-access stratum (NAS) message, a radio resource control (RRC) message, a media access control-control element (MAC CE) message, a downlink control information (DCI) message, an uplink control information (UCI) message, a physical uplink control channel (PUCCH) message, a physical uplink shared channel (PUSCH) message, an inter-node message, an Xn interface message, an F1 interface message, an E1 interface message, an NG interface message, a core service-based architecture message, or an AI dedicated message.

Any information involved in embodiments of the disclosure, such as any information from the first information to the thirteenth information, can be carried in any one of the following message types: a unicast message, a groupcast message, or a broadcast message.

In some examples, regarding a unicast message (one-to-one), a source transmits a unicast message over a unicast channel, and only a terminal device or a network device to which a corresponding unicast resource is allocated can attempt to receive the unicast message. The unicast message can also be referred to as dedicated signaling.

In some examples, regarding a groupcast message (one-to-multiple), the source transmits a groupcast message over a groupcast channel, and a terminal device or a network device which is a group member and located within a groupcast signal coverage can attempt to receive the groupcast message. After joining a group, the terminal device or the network device obtains a groupcast channel-related resource.

In some examples, regarding a broadcast message (one-to-any), the source transmits a broadcast message over a broadcast channel, and any terminal device or network device within a broadcast signal coverage can attempt to receive the broadcast message.

FIG. 6 is a schematic flowchart of a communication method according to an embodiment of the disclosure. The method 600 can optionally be applied to the system illustrated in FIG. 1, but is not limited thereto. The method includes at least some of the following.

S610, a second device receives first information, where the first information includes a first model ID, and the first model ID includes a first information field and/or a second information field.

In an implementation, the first information field includes at least one of: a semantic-invariant model ID, a universal model ID, and a global unique model ID.

In an implementation, the second information field includes a semantic-variable model ID and/or a custom model ID.

In an implementation, the first information field and/or the second information field has model description information associated therewith.

In an implementation, the model description information includes one or more of: a model-associated functional characteristic, model-associated input-parameter type information, model-associated input-parameter format requirement information, a model-associated input-parameter pre-processing rule, model-associated output-parameter type information, model-associated output-parameter format requirement information, a model-associated output-parameter pre-processing rule, model-associated application scenario information, model-associated deployment location information, capability requirement information for model usage, model-associated performance monitoring index information, model-associated home location information, model-associated valid use range information, model generalization characteristic information, model version information, model accuracy level information, model-data compilation format information, model data storage format information, model computation complexity information, model complexity information, or model size information.

In an implementation, association information between the first information field and model description information associated with the first information field is predefined.

In an implementation, association information between the second information field and model description information associated with the second information field is obtained through model detection or testing.

In an implementation, the first information further includes model description information associated with the second information field.

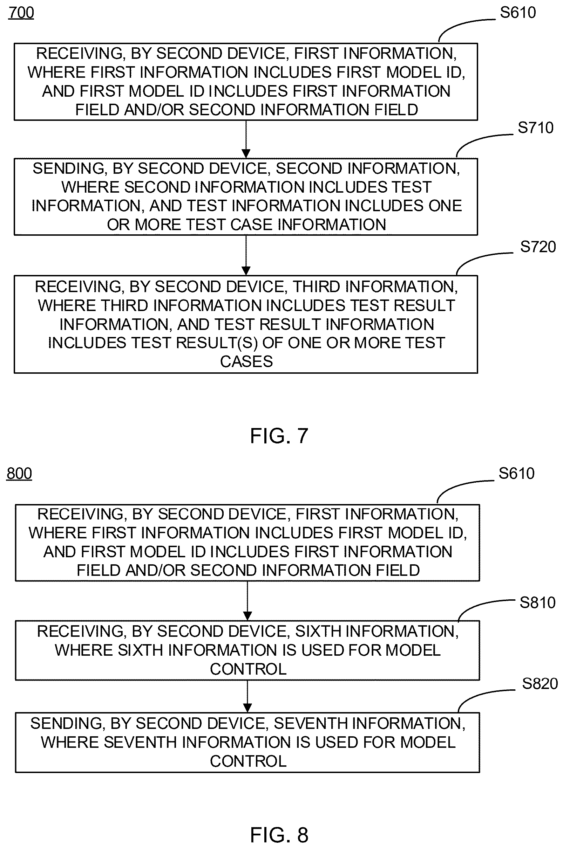

FIG. 7 is a schematic flowchart of a communication method according to another embodiment of the disclosure. The method 700 can include at least one feature of the method embodiment implemented by the second device. The method 700 further includes the following.

S710, the second device sends second information, where the second information includes test information, and the test information includes one or more test case information.

In an implementation, as illustrated in FIG. 7, the method further includes the following.

S720, the second device receives third information, where the third information includes test result information, and the test result information includes a test result(s) of one or more test cases.

In an implementation, the method further includes the following. The second device sends fourth information, where the fourth information includes rejection information, and the rejection information is used for rejecting a request made in the first information.

In an implementation, the fourth information further includes rejection reason information.

In an implementation, the method further includes the following. The second device sends fifth information, where the fifth information includes request acceptance information and/or a third information field.

In an implementation, the method further includes the following. A second model ID is generated based on the third information field.

In an implementation, the second model ID is generated in at least one of the following manners. The second model ID is obtained by combining the first information field and all or some information subfields of the third information field. Alternatively, the second model ID is obtained by combining the first information field, the second information field, and all or some information subfields of the third information field.

In an implementation, the second information field and/or the third information field includes one or more of the following information in an information subfield: model-associated operator information, model-associated terminal-device vendor information, model-associated model provider or producer information, model-associated chip vendor information, model-associated network-device vendor information, model version number information, or model-associated temporary ID information.

FIG. 8 is a schematic flowchart of a communication method according to another embodiment of the disclosure. The method 800 can include at least one feature of the method embodiment implemented by the second device. The method 800 further includes the following.

S810, the second device receives sixth information, where the sixth information is used for model control, and the sixth information includes one or more of: the first model ID, the second information field, the second model ID, or one or more information subfields of the third information field.

In an implementation, as illustrated in FIG. 8, the method further includes the following,

S820, the second device sends seventh information, where the seventh information is used for model control, and the seventh information includes one or more of: the first model ID, the second information field, the second model ID, or one or more information subfields of the third information field.

In an implementation, model control includes one or more of: model selection, model activation, model deactivation, model switching, model deletion, model monitoring, model inference, model training, model update, model-associated capability exchange, model registration, model transmission, model training-data collection, model monitoring-data collection, model inference-data collection, model update-data collection, or model deployment.

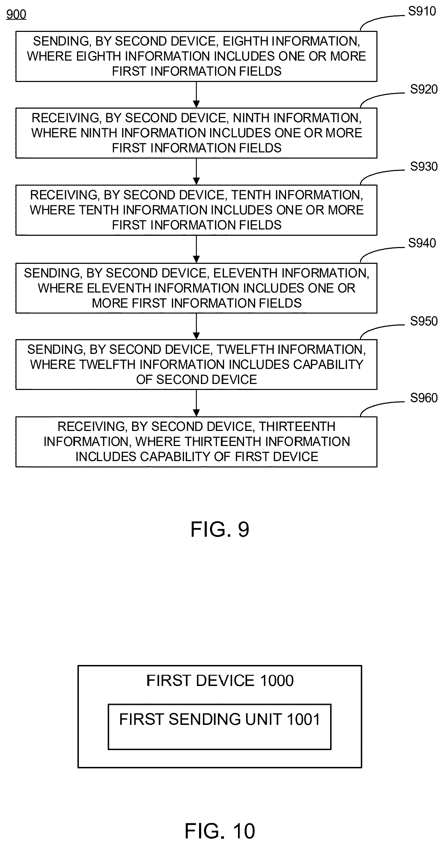

FIG. 9 is a schematic flowchart of a communication method according to another embodiment of the disclosure. The method 900 can include at least one feature of the method embodiment implemented by the second device. The method further includes the following.

S910, the second device sends eighth information, where the eighth information includes one or more first information fields.

In an implementation, the eighth information indicates to the first device to carry out information synchronization with the second device regarding model description information associated with a target model deployed by the first device.

In an implementation, as illustrated in FIG. 9, the method further includes the following.

S920, the second device receives ninth information, where the ninth information includes one or more first information fields.

In an implementation, the ninth information indicates to the second device that information synchronization of the model description information associated with the target model deployed by the first device can be carried out with the second device.

In an implementation, as illustrated in FIG. 9, the method further includes the following.

S930, the second device receives tenth information, where the tenth information includes one or more first information fields.

In an implementation, the tenth information indicates a first information field associated with a model which has been stored or deployed by the first device and/or a first information field associated with a model which has not been stored or deployed by the first device.

In an implementation, as illustrated in FIG. 9, the method further includes the following.

S940, the second device sends eleventh information, where the eleventh information includes one or more first information fields.

In an implementation, the eleventh information is used for querying a model stored and/or deployed by the first device.

In an implementation, as illustrated in FIG. 9, the method further includes the following.

S950, the second device sends twelfth information, where the twelfth information includes a capability of the second device.

In an implementation, the capability of the second device include one or more of: whether model registration is supported; whether information synchronization of model description information is supported; whether model control is supported; or whether model information query is supported.

In an implementation, as illustrated in FIG. 9, the method further includes the following.

S960, the second device receives thirteenth information, where the thirteenth information includes a capability of the first device.

In an implementation, the capability of the first device includes one or more of: whether model registration is supported; whether information synchronization of model description information is supported; whether model control is supported; or whether model information query is supported.

In an implementation, the second device is a terminal device or a network device.

For the specific examples of performing the communication method 600, the communication method 700, the communication method 800, and the communication method 900 by the second device in this embodiment, reference can be made to related elaborations of the second device in the foregoing communication method 200, the communication method 300, the communication method 400, and the communication method 500, which are not described herein again for brevity.

FIG. 10 is a schematic block diagram of a first device 1000 according to an embodiment of the disclosure. The first device 1000 can include a first sending unit 1001. The first sending unit 1001 is configured to send first information, where the first information includes a first model ID, and the first model ID includes a first information field and/or a second information field.

In an implementation, the first information field includes at least one of: a semantic-invariant model ID, a universal model ID, and a global unique model ID.

In an implementation, the second information field includes a semantic-variable model ID and/or a custom model ID.

In an implementation, the first information field and/or the second information field has model description information associated therewith.

In an implementation, the model description information includes one or more of: a model-associated functional characteristic, model-associated input-parameter type information, model-associated input-parameter format requirement information, a model-associated input-parameter pre-processing rule, model-associated output-parameter type information, model-associated output-parameter format requirement information, a model-associated output-parameter pre-processing rule, model-associated application scenario information, model-associated deployment location information, capability requirement information for model usage, model-associated performance monitoring index information, model-associated home location information, model-associated valid use range information, model generalization characteristic information, model version information, model accuracy level information, model-data compilation format information, model data storage format information, model computation complexity information, model complexity information, or model size information.

In an implementation, association information between the first information field and model description information associated with the first information field is predefined.

In an implementation, association information between the second information field and model description information associated with the second information field is obtained through model detection or testing.

In an implementation, the first information further includes model description information associated with the second information field.

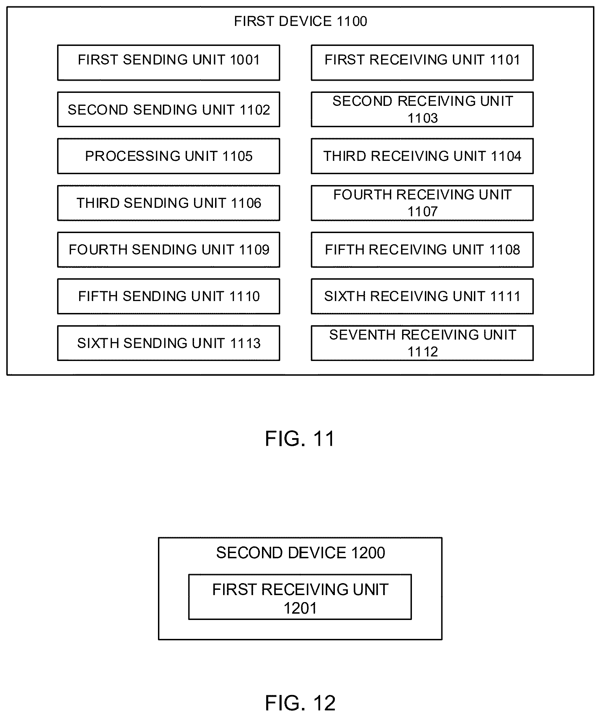

In an implementation, as illustrated in FIG. 11, the first device 1100 further includes a first receiving unit 1101. The first receiving unit 1101 configured for the first device to receive second information, where the second information includes test information, and the test information includes one or more test case information.

In an implementation, the first device further includes a second sending unit 1102. The second sending unit 1102 is configured to send third information, where the third information includes test result information, and the test result information includes a test result of one or more test cases.

In an implementation, the first device further includes a second receiving unit 1103. The second receiving unit 1103 is configured to receive fourth information, where the fourth information includes rejection information, and the rejection information is used for rejecting a request made in the first information.

In an implementation, the fourth information further includes rejection reason information.

In an implementation, the first device further includes a third receiving unit 1104. The third receiving unit 1104 is configured to receive fifth information, where the fifth information includes request acceptance information and/or a third information field.

In an implementation, the first device further includes a processing unit 1105. The processing unit 1105 is configured to generate a second model ID based on the third information field.

In an implementation, the second model ID is generated in at least one of the following manners. The second model ID is obtained by combining the first information field and all or some information subfields of the third information field. Alternatively, the second model ID is obtained by combining the first information field, the second information field, and all or some information subfields of the third information field.

In an implementation, the second information field and/or the third information field includes one or more of the following information in an information subfield: model-associated operator information, model-associated terminal-device vendor information, model-associated model provider or producer information, model-associated chip vendor information, model-associated network-device vendor information, model version number information, or model-associated temporary ID information.

In an implementation, the first device further includes a third sending unit 1106. The third sending unit 1106 is configured to send sixth information, where the sixth information is used for model control, and the sixth information includes one or more of: the first model ID, the second information field, the second model ID, or one or more information subfields of the third information field.

In an implementation, the first device further includes a fourth receiving unit 1107. The fourth receiving unit 1107 is configured to receive seventh information, where the seventh information is used for model control, and the seventh information includes one or more of: the first model ID, the second information field, the second model ID, or one or more information subfields of the third information field.

In an implementation, model control includes one or more of: model selection, model activation, model deactivation, model switching, model deletion, model monitoring, model inference, model training, model update, model-associated capability exchange, model registration, model transmission, model training-data collection, model monitoring-data collection, model inference-data collection, model update-data collection, or model deployment.

In an implementation, the first device further includes a fifth receiving unit 1108. The fifth receiving unit 1108 is configured to receive eighth information, where the eighth information includes one or more first information fields.

In an implementation, the eighth information indicates to the first device to carry out information synchronization with the second device regarding model description information associated with a target model deployed by the first device.

In an implementation, the first device further includes a fourth sending unit 1109. The fourth sending unit 1109 is configured to send ninth information, where the ninth information includes one or more first information fields.

In an implementation, the ninth information indicates to the second device that information synchronization of the model description information associated with the target model deployed by the first device can be carried out with the second device.

In an implementation, the first device further includes a fifth sending unit 1110. The fifth sending unit 1110 is configured to send tenth information, where the tenth information includes one or more first information fields.

In an implementation, the tenth information indicates a first information field associated with a model which has been stored or deployed by the first device and/or a first information field associated with a model which has not been stored or deployed by the first device.

In an implementation, the first device further includes a sixth receiving unit 1111. The sixth receiving unit 1111 is configured to receive eleventh information, where the eleventh information includes one or more first information fields.

In an implementation, the eleventh information is used for querying a model stored and/or deployed by the first device.

In an implementation, the first device further includes a seventh receiving unit 1112. The seventh receiving unit 1112 is configured to receive twelfth information, where the twelfth information includes a capability of the second device.

In an implementation, the capability of the second device include one or more of: whether model registration is supported; whether information synchronization of model description information is supported; whether model control is supported; or whether model information query is supported.

In an implementation, the first device further includes a sixth sending unit 1113. The sixth sending unit 1113 is configured to send thirteenth information, where the thirteenth information includes a capability of the first device.

In an implementation, the capability of the first device includes one or more of: whether model registration is supported; whether information synchronization of model description information is supported; whether model control is supported; or whether model information query is supported.

In an implementation, the first device is a terminal device or a network device.

The first device 1000 and the first device 1100 in embodiments of the disclosure can implement corresponding functions of the first device in the foregoing method embodiments. For corresponding processes, functions, implementations, and beneficial effects of various modules (sub-modules, units, or components) in the first device 1000 and the first device 1100, reference can be made to corresponding elaborations in the foregoing method embodiments, which are not repeatedly described herein. It should be noted that, the described functions of various modules (sub-modules, units, or components, etc.) in the first device according to embodiments of the disclosure can be implemented by different modules (sub-modules, units, or components, etc.), or can be implemented by the same module (sub-module, unit, or component, etc.).

FIG. 12 is a schematic block diagram of a second device 1200 according to an embodiment of the disclosure. The second device 1200 can include a first receiving unit 1201. The first receiving unit 1201 is configured to receive first information, where the first information includes a first model ID, and the first model ID includes a first information field and/or a second information field.

In an implementation, the first information field includes at least one of: a semantic-invariant model ID, a universal model ID, and a global unique model ID.

In an implementation, the second information field includes a semantic-variable model ID and/or a custom model ID.

In an implementation, the first information field and/or the second information field has model description information associated therewith.

In an implementation, the model description information includes one or more of: a model-associated functional characteristic, model-associated input-parameter type information, model-associated input-parameter format requirement information, a model-associated input-parameter pre-processing rule, model-associated output-parameter type information, model-associated output-parameter format requirement information, a model-associated output-parameter pre-processing rule, model-associated application scenario information, model-associated deployment location information, capability requirement information for model usage, model-associated performance monitoring index information, model-associated home location information, model-associated valid use range information, model generalization characteristic information, model version information, model accuracy level information, model-data compilation format information, model data storage format information, model computation complexity information, model complexity information, or model size information.

In an implementation, association information between the first information field and model description information associated with the first information field is predefined.

In an implementation, association information between the second information field and model description information associated with the second information field is obtained through model detection or testing.

In an implementation, the first information further includes model description information associated with the second information field.

In an implementation, the second device 1300 further includes a first sending unit 1301. The first sending unit 1301 is configured to send second information, where the second information includes test information, and the test information includes one or more test case information.

In an implementation, the second device further includes a second receiving unit 1302. The second receiving unit 1302 is configured to receive third information, where the third information includes test result information, and the test result information includes a test result of one or more test cases.

In an implementation, the second device further includes a second sending unit 1303, configured to send fourth information, where the fourth information includes rejection information, and the rejection information is used for rejecting a request made in the first information.

In an implementation, the fourth information further includes rejection reason information.

In an implementation, the second device further includes a third sending unit 1304. The third sending unit 1304 is configured to send fifth information, where the fifth information includes request acceptance information and/or a third information field.

In an implementation, the second device further includes a processing unit 1305. The processing unit 1305 is configured to generate a second model ID based on the third information field.

In an implementation, the second model ID is generated in at least one of the following manners. The second model ID is obtained by combining the first information field and all or some information subfields of the third information field. Alternatively, the second model ID is obtained by combining the first information field, the second information field, and all or some information subfields of the third information field.

In an implementation, the second information field and/or the third information field includes one or more of the following information in an information subfield: model-associated operator information, model-associated terminal-device vendor information, model-associated model provider or producer information, model-associated chip vendor information, model-associated network-device vendor information, model version number information, or model-associated temporary ID information.

In an implementation, the second device further includes a third receiving unit 1306.The third receiving unit 1306 is configured to receive sixth information, where the sixth information is used for model control, and the sixth information includes one or more of: the first model ID, the second information field, the second model ID, or one or more information subfields of the third information field.

In an implementation, the second device further includes a fourth sending unit 1307. The fourth sending unit 1307 is configured to send seventh information, where the seventh information is used for model control, and the seventh information includes one or more of: the first model ID, the second information field, the second model ID, or one or more information subfields of the third information field.

In an implementation, model control includes one or more of: model selection, model activation, model deactivation, model switching, model deletion, model monitoring, model inference, model training, model update, model-associated capability exchange, model registration, model transmission, model training-data collection, model monitoring-data collection, model inference-data collection, model update-data collection, or model deployment.

In an implementation, the second device further includes a fifth sending unit 1308. The fifth sending unit 1308 is configured to send eighth information, where the eighth information includes one or more first information fields.

In an implementation, the eighth information indicates to the first device to carry out information synchronization with the second device regarding model description information associated with a target model deployed by the first device.

In an implementation, the second device further includes a fourth receiving unit 1309. The fourth receiving unit 1309 is configured to receive ninth information, where the ninth information includes one or more first information fields.

In an implementation, the ninth information indicates to the second device that information synchronization of the model description information associated with the target model deployed by the first device can be carried out with the second device.

In an implementation, the second device further includes a fifth receiving unit 1310. The fifth receiving unit 1310 is configured to receive tenth information, where the tenth information includes one or more first information fields.

In an implementation, the tenth information indicates a first information field associated with a model which has been stored or deployed by the first device and/or a first information field associated with a model which has not been stored or deployed by the first device.

In an implementation, the second device further includes a sixth sending unit 1311. The sixth sending unit 1311 is configured to send eleventh information, where the eleventh information includes one or more first information fields.

In an implementation, the eleventh information is used for querying a model stored and/or deployed by the first device.

In an implementation, the second device further includes a seventh sending unit 1312. The seventh sending unit 1312 is configured to send twelfth information, where the twelfth information includes a capability of the second device.

In an implementation, the capability of the second device includes one or more of: whether model registration is supported; whether information synchronization of model description information is supported; whether model control is supported; or whether model information query is supported.

In an implementation, the second device further includes a sixth receiving unit 1313. The sixth receiving unit 1313 is configured to receive thirteenth information, where the thirteenth information includes a capability of the first device.

In an implementation, the capability of the first device includes one or more of: whether model registration is supported; whether information synchronization of model description information is supported; whether model control is supported; or whether model information query is supported.

In an implementation, the second device is a terminal device or a network device.

The second device 1200 and the second device 1300 in embodiments of the disclosure can implement corresponding functions of the second device in the foregoing method embodiments. For corresponding processes, functions, implementations, and beneficial effects of various modules (sub-modules, units, or components) in the second device, reference can be made to corresponding elaborations in the foregoing method embodiments, which are not repeatedly described herein. It should be noted that, the described functions of various modules (sub-modules, units, or components, etc.) in the second device according to embodiments of the disclosure can be implemented by different modules (sub-modules, units, or components, etc.), or can be implemented by the same module (sub-module, unit, or component, etc.).

The communication method in embodiments of the disclosure can be a model ID management method. With the method, at least one of the following beneficial effects can be achieved.

Both universality of a global unique model ID and flexibility of controlling a variable model ID are taken into account, so that a control procedure based on the model ID is more flexible. For example, it is possible to use a global unique model ID alone, or use a variable model ID alone, or use the two in combination.

Both universality of a global unique model ID and flexibility of controlling a variable model ID are taken into account, so that different model implementation versions using the same global unique model ID can be finely managed. It is possible to take into account reliability management for each model implementation version while retaining model implementation flexibility, instead of using only a global unique model ID that will result in coarse management, thereby improving the controllability of a communication system.

Model description information of different model implementation versions using the same global unique model ID is aligned, so that a model control end (for example, the second device) controls and manages a corresponding model based on the aligned model description information.

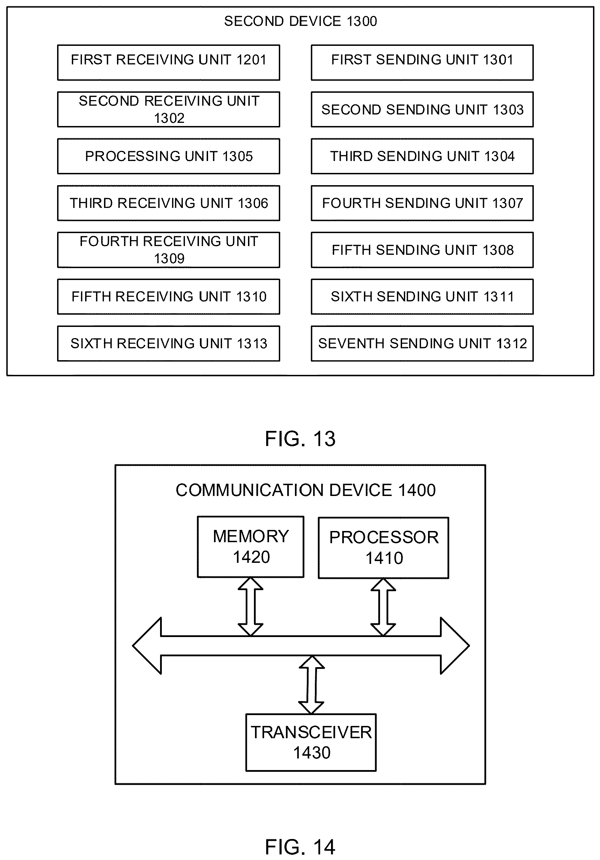

FIG. 14 is a schematic structural diagram of a communication device 1400 according to embodiments of the disclosure. The communication device 1400 includes a processor 1410. The processor 1410 can invoke and execute computer programs stored in a memory, to cause the communication device 1400 to implement the method in embodiments of the disclosure.

In an implementation, the communication device 1400 can further include a memory 1420. The processor 1410 can invoke and execute computer programs from the memory 1420, to cause the communication device 1400 to implement the method in embodiments of the disclosure.

The memory 1420 can be a separate device independent of the processor 1410, or can be integrated into the processor 1410.

In an implementation, the communication device 1400 can further include a transceiver 1430. The processor 1410 can control the transceiver 1430 to communicate with other devices, and specifically, can send information or data to other devices or receive information or data sent by other devices.

The transceiver 1430 can include a transmitter and a receiver. The transceiver 1430 can further include an antenna, where one or more antennas can be provided.

In an implementation, the communication device 1400 can be a first device in embodiments of the disclosure, and the communication device 1400 can implement corresponding processes implemented by the first device in various methods in embodiments of the disclosure, which are not described herein again for brevity.

In an implementation, the communication device 1400 can be a second device in embodiments of the disclosure, and the communication device 1400 can implement corresponding processes implemented by the second device in various methods in embodiments of the disclosure, which are not described herein again for brevity.

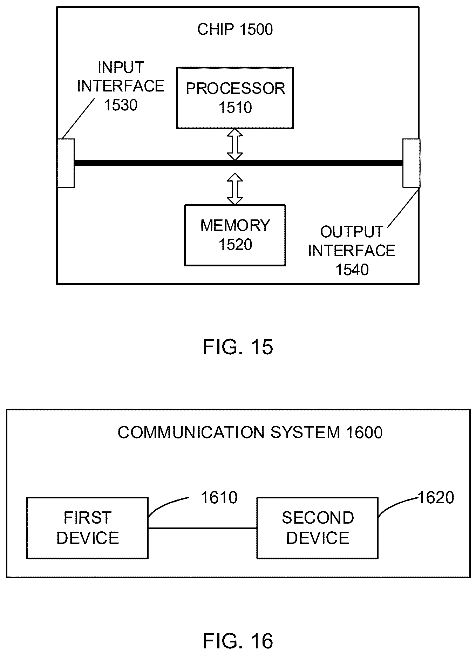

FIG. 15 is a schematic structural diagram of a chip 1500 according to embodiments of the present disclosure. The chip 1500 includes a processor 1510. The processor 1510 can invoke and execute computer programs from a memory, to implement the method in embodiments of the present disclosure.

In an embodiment, the chip 1500 can further include a memory 1520. The processor 1510 can invoke and execute computer programs from the memory 1520, so as to implement the method performed by the first device or the second device in embodiments of the disclosure.

The memory 1520 can be a separate component independent of the processor 1510, or can be integrated into the processor 1510.

In an implementation, the chip 1500 can further include an input interface 1530. The processor 1510 can control the input interface 1530 to communicate with other devices or chips, and specifically, can obtain information or data sent by other devices or chips.

In an implementation, the chip 1500 can further include an output interface 1540. The processor 1510 can control the output interface 1540 to communicate with other devices or chips, and specifically, can output information or data to other devices or chips.

In an implementation, the chip can be applied to a first device in embodiments of the disclosure, and the chip can implement corresponding processes implemented by the first device in various methods in embodiments of the disclosure, which are not described herein again for brevity.

In an implementation, the chip can be applied to the second device in embodiments of the disclosure, and the chip can implement corresponding processes implemented by the second device in various methods in embodiments of the disclosure, which are not described herein again for brevity.

The chip applied to the first device and the chip applied to the second device can be the same chip or different chips.

It should be understood that, the chip mentioned in embodiments of the disclosure can also be referred to as a system-on-chip (SOC), or the like.

The foregoing processor can be a general-purpose processor, a digital signal processor (DSP), a field programmable gate array (FPGA), an application specific integrated circuit (ASIC), or other programmable logic devices, discrete gates or transistor logic devices, discrete hardware components. The general-purpose processor can be a microprocessor, or the processor can be any conventional processor or the like.

The memory mentioned above can be a volatile memory or a non-volatile memory, or can include both the volatile memory and the non-volatile memory. The non-volatile memory may be a read-only memory (ROM), a programmable ROM (PROM), an erasable PROM (EPROM), an electrically EPROM (EEPROM), or flash memory. The volatile memory can be a random access memory (RAM).

It should be understood that, the memory above is intended for illustration rather than limitation. For example, the memory in embodiments of the disclosure may also be a static RAM (SRAM), a dynamic RAM (DRAM), an synchronous DRAM (SDRAM), a double data rate SDRAM (DDR SDRAM), an enhanced SDRAM (ESDRAM), an synchlink DRAM (SLDRAM), a direct rambus RAM (DR RAM), etc. In other words, the memory in embodiments of the disclosure is intended to include, but is not limited to, these and any other suitable types of memory.

FIG. 16 is a schematic block diagram of a communication system 1600 according to embodiments of the disclosure. The communication system 1600 includes a first device 1610 and a second device 1620.

The first device 1610 is configured to send first information, where the first information includes a first model ID, and the first model ID includes a first information field and/or a second information field.

The second device 1620 is configured to receive the first information.

The first device 1610 can be configured to implement a corresponding function implemented by the first device in the foregoing method, and the second device 1620 can be configured to implement a corresponding function implemented by the second device in the foregoing method, which are not described herein again for brevity.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It should be understood that, in various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method, comprising:
sending, by a first device, first information, wherein the first information comprises a first model identity (ID), and the first model ID comprises a first information field and/or a second information field.

2. The method of claim 1, wherein the first information field comprises at least one of: a semantic-invariant model ID, a universal model ID, and a global unique model ID.

3. The method of claim 1 or 2, wherein the second information field comprises a semantic-variable model ID and/or a custom model ID.

4. The method of any of claims 1 to 3, wherein the first information field and/or the second information field has model description information associated therewith.

5. The method of claim 4, wherein the model description information comprises one or more of:
a model-associated functional characteristic, model-associated input-parameter type information, model-associated input-parameter format requirement information, a model-associated input-parameter pre-processing rule, model-associated output-parameter type information, model-associated output-parameter format requirement information, a model-associated output-parameter pre-processing rule, model-associated application scenario information, model-associated deployment location information, capability requirement information for model usage, model-associated performance monitoring index information, model-associated home location information, model-associated valid use range information, model generalization characteristic information, model version information, model accuracy level information, model-data compilation format information, model data storage format information, model computation complexity information, model complexity information, or model size information.

6. The method of any of claims 1 to 5, wherein association information between the first information field and model description information associated with the first information field is predefined.

7. The method of any of claims 1 to 6, wherein association information between the second information field and model description information associated with the second information field is obtained through model detection or testing.

8. The method of any of claims 1 to 7, wherein the first information further comprises model description information associated with the second information field.

9. The method of any of claims 1 to 8, further comprising:
receiving, by the first device, second information, wherein the second information comprises test information, and the test information comprises one or more test case information.

10. The method of claim 9, further comprising:
sending, by the first device, third information, wherein the third information comprises test result information, and the test result information comprises a test result of one or more test cases.

11. The method of any of claims 1 to 10, further comprising:
receiving, by the first device, fourth information, wherein the fourth information comprises rejection information, and the rejection information is used for rejecting a request made in the first information.

12. The method of claim 11, wherein the fourth information further comprises rejection reason information.

13. The method of any of claims 1 to 12, further comprising:
receiving, by the first device, fifth information, wherein the fifth information comprises request acceptance information and/or a third information field.

14. The method of claim 13, further comprising:
generating, by the first device, a second model ID based on the third information field.

15. The method of claim 14, wherein generating, by the first device, the second model ID based on the third information field comprises at least one of:
obtaining the second model ID by combining the first information field and all or some information subfields of the third information field; or
obtaining the second model ID by combining the first information field, the second information field, and all or some information subfields of the third information field.

16. The method of any of claims 1 to 15, wherein the second information field and/or the third information field comprises one or more of the following information in an information subfield:
model-associated operator information, model-associated terminal-device vendor information, model-associated model provider or producer information, model-associated chip vendor information, model-associated network-device vendor information, model version number information, or model-associated temporary ID information.

17. The method of any of claims 1 to 16, further comprising:
sending, by the first device, sixth information, wherein the sixth information is used for model control, and the sixth information comprises one or more of: the first model ID, the second information field, the second model ID, or one or more information subfields of the third information field.

18. The method of any of claims 1 to 17, further comprising:
receiving, by the first device, seventh information, wherein the seventh information is used for model control, and the seventh information comprises one or more of: the first model ID, the second information field, the second model ID, or one or more information subfields of the third information field.

19. The method of claim 17 or 18, wherein model control comprises one or more of:
model selection, model activation, model deactivation, model switching, model deletion, model monitoring, model inference, model training, model update, model-associated capability exchange, model registration, model transmission, model training-data collection, model monitoring-data collection, model inference-data collection, model update-data collection, or model deployment.

20. The method of any of claims 1 to 19, further comprising:
receiving, by the first device, eighth information, wherein the eighth information comprises one or more first information fields.

21. The method of claim 20, wherein the eighth information indicates to the first device to carry out information synchronization with the second device regarding model description information associated with a target model deployed by the first device.

22. The method of any of claims 1 to 21, further comprising:
sending, by the first device, ninth information, wherein the ninth information comprises one or more first information fields.

23. The method of claim 22, wherein the ninth information indicates to the second device that information synchronization of the model description information associated with the target model deployed by the first device can be carried out with the second device.

24. The method of any of claims 1 to 23, further comprising:
sending, by the first device, tenth information, wherein the tenth information comprises one or more first information fields.

25. The method of claim 24, wherein the tenth information indicates a first information field associated with a model which has been stored or deployed by the first device and/or a first information field associated with a model which has not been stored or deployed by the first device.

26. The method of any of claims 1 to 25, further comprising:
receiving, by the first device, eleventh information, wherein the eleventh information comprises one or more first information fields.

27. The method of claim 26, wherein the eleventh information is used for querying a model stored and/or deployed by the first device.

28. The method of any of claims 1 to 27, further comprising:
receiving, by the first device, twelfth information, wherein the twelfth information comprises a capability of the second device.

29. The method of claim 28, wherein the capability of the second device comprises one or more of:
whether model registration is supported;
whether information synchronization of model description information is supported;
whether model control is supported; or
whether model information query is supported.

30. The method of any of claims 1 to 29, further comprising:
sending, by the first device, thirteenth information, wherein the thirteenth information comprises a capability of the first device.

31. The method of claim 30, wherein the capability of the first device comprises one or more of:
whether model registration is supported;
whether information synchronization of model description information is supported;
whether model control is supported; or
whether model information query is supported.

32. The method of any of claims 1 to 31, wherein the first device is a terminal device or a network device.

33. A communication method, comprising:
receiving, by a second device, first information, wherein the first information comprises a first model identity (ID), and the first model ID comprises a first information field and/or a second information field.

34. The method of claim 33, wherein the first information field comprises at least one of: a semantic-invariant model ID, a universal model ID, and a global unique model ID.

35. The method of claim 33 or 34, wherein the second information field comprises a semantic-variable model ID and/or a custom model ID.

36. The method of any of claims 33 to 35, wherein the first information field and/or the second information field has model description information associated therewith.

37. The method of claim 36, wherein the model description information comprises one or more of:
a model-associated functional characteristic, model-associated input-parameter type information, model-associated input-parameter format requirement information, a model-associated input-parameter pre-processing rule, model-associated output-parameter type information, model-associated output-parameter format requirement information, a model-associated output-parameter pre-processing rule, model-associated application scenario information, model-associated deployment location information, capability requirement information for model usage, model-associated performance monitoring index information, model-associated home location information, model-associated valid use range information, model generalization characteristic information, model version information, model accuracy level information, model-data compilation format information, model data storage format information, model computation complexity information, model complexity information, or model size information.

38. The method of any of claims 33 to 37, wherein association information between the first information field and model description information associated with the first information field is predefined.

39. The method of any of claims 33 to 38, wherein association information between the second information field and model description information associated with the second information field is obtained through model detection or testing.

40. The method of any of claims 33 to 39, wherein the first information further comprises model description information associated with the second information field.

41. The method of any of claims 33 to 40, further comprising:
sending, by the second device, second information, wherein the second information comprises test information, and the test information comprises one or more test case information.

42. The method of claim 41, further comprising:
receiving, by the second device, third information, wherein the third information comprises test result information, and the test result information comprises a test result of one or more test cases.

43. The method of any of claims 33 to 42, further comprising:
sending, by the second device, fourth information, wherein the fourth information comprises rejection information, and the rejection information is used for rejecting a request made in the first information.

44. The method of claim 43, wherein the fourth information further comprises rejection reason information.

45. The method of any of claims 33 to 44, further comprising:
sending, by the second device, fifth information, wherein the fifth information comprises request acceptance information and/or a third information field.

46. The method of claim 45, further comprising:
generating, by the second device, a second model ID based on the third information field.

47. The method of claim 46, wherein generating the second model ID based on the third information field comprises at least one of:
obtaining the second model ID by combining the first information field and all or some information subfields of the third information field; or
obtaining the second model ID by combining the first information field, the second information field, and all or some information subfields of the third information field.

48. The method of any of claims 33 to 47, wherein the second information field and/or the third information field comprises one or more of the following information in an information subfield:
model-associated operator information, model-associated terminal-device vendor information, model-associated model provider or producer information, model-associated chip vendor information, model-associated network-device vendor information, model version number information, or model-associated temporary ID information.

49. The method of any of claims 33 to 48, further comprising:
receiving, by the second device, sixth information, wherein the sixth information is used for model control, and the sixth information comprises one or more of: the first model ID, the second information field, the second model ID, or one or more information subfields of the third information field.

50. The method of any of claims 33 to 49, further comprising:
sending, by the second device, seventh information, wherein the seventh information is used for model control, and the seventh information comprises one or more of: the first model ID, the second information field, the second model ID, or one or more information subfields of the third information field.

51. The method of claim 49 or 50, wherein model control comprises one or more of:
model selection, model activation, model deactivation, model switching, model deletion, model monitoring, model inference, model training, model update, model-associated capability exchange, model registration, model transmission, model training-data collection, model monitoring-data collection, model inference-data collection, model update-data collection, or model deployment.

52. The method of any of claims 33 to 51, further comprising:
sending, by the second device, eighth information, wherein the eighth information comprises one or more first information fields.

53. The method of claim 52, wherein the eighth information indicates to the first device to carry out information synchronization with the second device regarding model description information associated with a target model deployed by the first device.

54. The method of any of claims 33 to 53, further comprising:
receiving, by the second device, ninth information, wherein the ninth information comprises one or more first information fields.

55. The method of claim 54, wherein the ninth information indicates to the second device that information synchronization of the model description information associated with the target model deployed by the first device can be carried out with the second device.

56. The method of any of claims 33 to 55, further comprising:
receiving, by the second device, tenth information, wherein the tenth information comprises one or more first information fields.

57. The method of claim 56, wherein the tenth information indicates a first information field associated with a model which has been stored or deployed by the first device and/or a first information field associated with a model which has not been stored or deployed by the first device.

58. The method of any of claims 33 to 57, further comprising:
sending, by the second device, eleventh information, wherein the eleventh information comprises one or more first information fields.

59. The method of claim 58, wherein the eleventh information is used for querying a model stored and/or deployed by the first device.

60. The method of any of claims 33 to 59, further comprising:
sending, by the second device, twelfth information, wherein the twelfth information comprises a capability of the second device.

61. The method of claim 60, wherein the capability of the second device comprises one or more of:
whether model registration is supported;
whether information synchronization of model description information is supported;
whether model control is supported; or
whether model information query is supported.

62. The method of any of claims 33 to 61, further comprising:
receiving, by the second device, thirteenth information, wherein the thirteenth information comprises a capability of the first device.

63. The method of claim 62, wherein the capability of the first device comprises one or more of:
whether model registration is supported;
whether information synchronization of model description information is supported;
whether model control is supported; or
whether model information query is supported.

64. The method of any of claims 33 to 63, wherein the second device is a terminal device or a network device.

65. A first device, comprising:
a first sending unit configured to send first information, wherein the first information comprises a first model identity (ID), and the first model ID comprises a first information field and/or a second information field.

66. The first device of claim 65, wherein the first information field comprises at least one of: a semantic-invariant model ID, a universal model ID, and a global unique model ID.

67. The first device of claim 65 or 66, wherein the second information field comprises a semantic-variable model ID and/or a custom model ID.

68. The first device of any of claims 65 to 67, wherein the first information field and/or the second information field has model description information associated therewith.

69. The first device of claim 68, wherein the model description information comprises one or more of:
a model-associated functional characteristic, model-associated input-parameter type information, model-associated input-parameter format requirement information, a model-associated input-parameter pre-processing rule, model-associated output-parameter type information, model-associated output-parameter format requirement information, a model-associated output-parameter pre-processing rule, model-associated application scenario information, model-associated deployment location information, capability requirement information for model usage, model-associated performance monitoring index information, model-associated home location information, model-associated valid use range information, model generalization characteristic information, model version information, model accuracy level information, model-data compilation format information, model data storage format information, model computation complexity information, model complexity information, or model size information.

70. The first device of any of claims 65 to 69, wherein association information between the first information field and model description information associated with the first information field is predefined.

71. The first device of any of claims 65 to 70, wherein association information between the second information field and model description information associated with the second information field is obtained through model detection or testing.

72. The first device of any of claims 65 to 71, wherein the first information further comprises model description information associated with the second information field.

73. The first device of any of claims 65 to 72, further comprising:
a first receiving unit configured for the first device to receive second information, wherein the second information comprises test information, and the test information comprises one or more test case information.

74. The first device of claim 73, further comprising:
a second sending unit configured to send third information, wherein the third information comprises test result information, and the test result information comprises a test result of one or more test cases.

75. The first device of any of claims 65 to 74, further comprising:
a second receiving unit configured to receive fourth information, wherein the fourth information comprises rejection information, and the rejection information is used for rejecting a request made in the first information.

76. The first device of claim 75, wherein the fourth information further comprises rejection reason information.

77. The first device of any of claims 65 to 76, further comprising:
a third receiving unit configured to receive fifth information, wherein the fifth information comprises request acceptance information and/or a third information field.

78. The first device of claim 77, further comprising:
a processing unit configured to generate a second model ID based on the third information field.

79. The first device of claim 78, wherein generating, by the first device, the second model ID based on the third information field comprises at least one of:
obtaining the second model ID by combining the first information field and all or some information subfields of the third information field; or
obtaining the second model ID by combining the first information field, the second information field, and all or some information subfields of the third information field.

80. The first device of any of claims 65 to 79, wherein the second information field and/or the third information field comprises one or more of the following information in an information subfield:
model-associated operator information, model-associated terminal-device vendor information, model-associated model provider or producer information, model-associated chip vendor information, model-associated network-device vendor information, model version number information, or model-associated temporary ID information.

81. The first device of any of claims 65 to 80, further comprising:
a third sending unit configured to send sixth information, wherein the sixth information is used for model control, and the sixth information comprises one or more of: the first model ID, the second information field, the second model ID, or one or more information subfields of the third information field.

82. The first device of any of claims 65 to 81, further comprising:
a fourth receiving unit configured to receive seventh information, wherein the seventh information is used for model control, and the seventh information comprises one or more of: the first model ID, the second information field, the second model ID, or one or more information subfields of the third information field.

83. The first device of claim 81 or 82, wherein model control comprises one or more of:
model selection, model activation, model deactivation, model switching, model deletion, model monitoring, model inference, model training, model update, model-associated capability exchange, model registration, model transmission, model training-data collection, model monitoring-data collection, model inference-data collection, model update-data collection, or model deployment.

84. The first device of any of claims 65 to 83, further comprising:
a fifth receiving unit configured to receive eighth information, wherein the eighth information comprises one or more first information fields.

85. The first device of claim 84, wherein the eighth information indicates to the first device to carry out information synchronization with the second device regarding model description information associated with a target model deployed by the first device.

86. The first device of any of claims 65 to 85, further comprising:
a fourth sending unit configured to send ninth information, wherein the ninth information comprises one or more first information fields.

87. The first device of claim 86, wherein the ninth information indicates to the second device that information synchronization of the model description information associated with the target model deployed by the first device can be carried out with the second device.

88. The first device of any of claims 65 to 87, further comprising:
a fifth sending unit configured to send tenth information, wherein the tenth information comprises one or more first information fields.

89. The first device of claim 88, wherein the tenth information indicates a first information field associated with a model which has been stored or deployed by the first device and/or a first information field associated with a model which has not been stored or deployed by the first device.

90. The first device of any of claims 65 to 89, further comprising:
a sixth receiving unit configured to receive eleventh information, wherein the eleventh information comprises one or more first information fields.

91. The first device of claim 90, wherein the eleventh information is used for querying a model stored and/or deployed by the first device.

92. The first device of any of claims 65 to 91, further comprising:
a seventh receiving unit configured to receive twelfth information, wherein the twelfth information comprises a capability of the second device.

93. The first device of claim 92, wherein the capability of the second device comprises one or more of:
whether model registration is supported;
whether information synchronization of model description information is supported;
whether model control is supported; or
whether model information query is supported.

94. The first device of any of claims 65 to 93, further comprising:
a sixth sending unit configured to send thirteenth information, wherein the thirteenth information comprises a capability of the first device.

95. The first device of claim 94, wherein the capability of the first device comprises one or more of:
whether model registration is supported;
whether information synchronization of model description information is supported;
whether model control is supported; or
whether model information query is supported.

96. The first device of any of claims 65 to 95, wherein the first device is a terminal device or a network device.

97. A second device, comprising:
a first receiving unit configured to receive first information, wherein the first information comprises a first model identity (ID), and the first model **ID** comprises a first information field and/or a second information field.

98. The second device of claim 97, wherein the first information field comprises at least one of: a semantic-invariant model ID, a universal model ID, and a global unique model ID.

99. The second device of claim 97 or 98, wherein the second information field comprises a semantic-variable model ID and/or a custom model ID.

100. The second device of any of claims 97 to 99, wherein the first information field and/or the second information field has model description information associated therewith.

101. The second device of claim 100, wherein the model description information comprises one or more of:
a model-associated functional characteristic, model-associated input-parameter type information, model-associated input-parameter format requirement information, a model-associated input-parameter pre-processing rule, model-associated output-parameter type information, model-associated output-parameter format requirement information, a model-associated output-parameter pre-processing rule, model-associated application scenario information, model-associated deployment location information, capability requirement information for model usage, model-associated performance monitoring index information, model-associated home location information, model-associated valid use range information, model generalization characteristic information, model version information, model accuracy level information, model-data compilation format information, model data storage format information, model computation complexity information, model complexity information, or model size information.

102. The second device of any of claims 97 to 101, wherein association information between the first information field and model description information associated with the first information field is predefined.

103. The second device of any of claims 97 to 102, wherein association information between the second information field and model description information associated with the second information field is obtained through model detection or testing.

104. The second device of any of claims 97 to 103, wherein the first information further comprises model description information associated with the second information field.

105. The second device of any of claims 97 to 104, further comprising:
a first sending unit configured to send second information, wherein the second information comprises test information, and the test information comprises one or more test case information.

106. The second device of claim 105, further comprising:
a second receiving unit configured to receive third information, wherein the third information comprises test result information, and the test result information comprises a test result of one or more test cases.

107. The second device of any of claims 97 to 106, further comprising:
a second sending unit configured to send fourth information, wherein the fourth information comprises rejection information, and the rejection information is used for rejecting a request made in the first information.

108. The second device of claim 107, wherein the fourth information further comprises rejection reason information.

109. The second device of any of claims 97 to 108, further comprising:
a third sending unit configured to send fifth information, wherein the fifth information comprises request acceptance information and/or a third information field.

110. The second device of claim 109, further comprising:
a processing unit configured to generate a second model ID based on the third information field.

111. The second device of claim 110, wherein generating the second model ID based on the third information field comprises at least one of:
obtaining the second model ID by combining the first information field and all or some information subfields of the third information field; or
obtaining the second model ID by combining the first information field, the second information field, and all or some information subfields of the third information field.

112. The second device of any of claims 97 to 111, wherein the second information field and/or the third information field comprises one or more of the following information in an information subfield:
model-associated operator information, model-associated terminal-device vendor information, model-associated model provider or producer information, model-associated chip vendor information, model-associated network-device vendor information, model version number information, or model-associated temporary ID information.

113. The second device of any of claims 97 to 112, further comprising:
a third receiving unit configured to receive sixth information, wherein the sixth information is used for model control, and the sixth information comprises one or more of: the first model ID, the second information field, the second model ID, or one or more information subfields of the third information field.

114. The second device of any of claims 97 to 113, further comprising:
a fourth sending unit configured to send seventh information, wherein the seventh information is used for model control, and the seventh information comprises one or more of: the first model ID, the second information field, the second model ID, or one or more information subfields of the third information field.

115. The second device of claim 113 or 114, wherein model control comprises one or more of:
model selection, model activation, model deactivation, model switching, model deletion, model monitoring, model inference, model training, model update, model-associated capability exchange, model registration, model transmission, model training-data collection, model monitoring-data collection, model inference-data collection, model update-data collection, or model deployment.

116. The second device of any of claims 97 to 115, further comprising:
a fifth sending unit configured to send eighth information, wherein the eighth information comprises one or more first information fields.

117. The second device of claim 116, wherein the eighth information indicates to the first device to carry out information synchronization with the second device regarding model description information associated with a target model deployed by the first device.

118. The second device of any of claims 97 to 117, further comprising:
a fourth receiving unit configured to receive ninth information, wherein the ninth information comprises one or more first information fields.

119. The second device of claim 118, wherein the ninth information indicates to the second device that information synchronization of the model description information associated with the target model deployed by the first device can be carried out with the second device.

120. The second device of any of claims 97 to 119, further comprising:
a fifth receiving unit configured to receive tenth information, wherein the tenth information comprises one or more first information fields.

121. The second device of claim 120, wherein the tenth information indicates a first information field associated with a model which has been stored or deployed by the first device and/or a first information field associated with a model which has not been stored or deployed by the first device.

122. The second device of any of claims 97 to 121, further comprising:
a sixth sending unit configured to send eleventh information, wherein the eleventh information comprises one or more first information fields.

123. The second device of claim 122, wherein the eleventh information is used for querying a model stored and/or deployed by the first device.

124. The second device of any of claims 97 to 123, further comprising:
a seventh sending unit configured to send twelfth information, wherein the twelfth information comprises a capability of the second device.

125. The second device of claim 124, wherein the capability of the second device comprises one or more of:
whether model registration is supported;
whether information synchronization of model description information is supported;
whether model control is supported; or
whether model information query is supported.

126. The second device of any of claims 97 to 125, further comprising:
a sixth receiving unit configured to receive thirteenth information, wherein the thirteenth information comprises a capability of the first device.

127. The second device of claim 126, wherein the capability of the first device comprises one or more of:
whether model registration is supported;
whether information synchronization of model description information is supported;
whether model control is supported; or
whether model information query is supported.

128. The second device of any of claims 97 to 127, wherein the second device is a terminal device or a network device.

129. A communication device, comprising:
a memory configured to store computer programs; and
a processor configured to invoke and execute the computer programs stored in the memory, to cause the communication device to perform the method of any of claims 1 to 32 or any of claims 33 to 64.

130. A chip, comprising:
a processor configured to invoke and execute computer programs from a memory, to cause a device equipped with the chip to perform the method of any of claims 1 to 32 or any of claims 33 to 64.

131. A computer-readable storage medium, configured to store computer programs which, when executed by a device, are operable with the device to perform the method of any of claims 1 to 32 or any of claims 33 to 64.

132. A computer program product, comprising computer program instructions which are operable with a computer to perform the method of any of claims 1 to 32 or any of claims 33 to 64.

133. A computer program, operable with a computer to perform the method of any of claims 1 to 32 or any of claims 33 to 64.
